(19) Europäisches Patentamt
European Patent Office
Office européen des brevets

(11) **EP 4 692 453 A1**

(12) **EUROPEAN PATENT APPLICATION**

(43) Date of publication:
**11.02.2026 Bulletin 2026/07**

(21) Application number: **24382878.7**

(22) Date of filing: **05.08.2024**

(51) International Patent Classification (IPC):
*D06P 1/00* (2006.01)    *D06P 1/44* (2006.01)
*D06P 1/62* (2006.01)    *D06P 1/651* (2006.01)
*D06P 5/13* (2006.01)    *D06P 5/15* (2006.01)
*D06P 5/20* (2006.01)    *B23K 26/0622* (2014.01)
*B23K 26/06* (2014.01)    *B23K 26/082* (2014.01)
*B23K 26/36* (2014.01)

(52) Cooperative Patent Classification (CPC):
**D06P 1/44; B23K 26/0622; B23K 26/0626;
B23K 26/082; B23K 26/0821; B23K 26/36;
D06P 1/0016; D06P 1/445; D06P 1/627;
D06P 1/65118; D06P 5/13; D06P 5/15;
D06P 5/2005;** B23K 2103/38

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **On-Laser Systems & Applications, S.
L.**
**08243 Manresa (ES)**

(72) Inventor: **VILA CLOSAS, Óscar**
**08272 Barcelona (ES)**

(74) Representative: **Elzaburu S.L.P.**
**Edificio Torre de Cristal**
**Paseo de la Castellana 259 C, planta 28**
**28046 Madrid (ES)**

(54) **A LASER MARKER FOR A TEXTILE MATERIAL**

(57) A solid-state laser marker modifies the finish of a textile material (B) dyed with a base pigment (C) and an over-pigmentation composition (D) superficially deposited on the base pigment (C) of the dyed textile material (B), the solid-state laser marker irradiates a laser beam (A) toward a pixel of a predetermined impregnated zone of the dyed textile material (B), the over-pigmentation composition (D) forms a spot, stained zone, on the surface of the predetermined zone of the dyed textile material (B), the laser beam (A) wholly or partially removing both the over-pigmentation composition (D) and the base pigment (C) fabric (B) located in the stained zone.

FIG. 5 A

Processed by Luminess, 75001 PARIS (FR)

EP 4 692 453 A1

FIG. 5B

## Description

### Field of the Invention

The present document relates to a solid-state laser marker of the fiber optic laser type that marks a textile material to modify the appearance of this material by providing different finishes on at least one irradiated zone with respect to other adjacent non-irradiated zones of the textile material. The irradiated zone is where an abrasion, discolouration of the textile material based on a predetermined design pattern is provided.

### Background of the Invention

As a fashion, denim dyed in different colours with a worn or faded look of the colour of denim is demanded. Denim garments reproduce different patterns of wear, fading, figures, and borders. Wear patterns have become part of denim style and fashion.

The processes for producing denim with wear patterns requires processing time, presents a high processing cost, and requires a lot of natural resources. A typical process for producing jeans uses significant amounts of water, between 20 and 60 litres to finish a pair of jeans.

Manufacturing this type of garment includes the use of a $CO_2$ gas laser to provide a predetermined finish to denim garments, obtaining a faded, worn, washed appearance.

However, one of the drawbacks in the sector is the existence of dyed textile materials that are not reactive according to the incidence of an existing laser marker. One setting is a denim garment dyed with pure indigo. This type of base pigment does not react with laser radiation using a fiber solid-state laser. However, it does react to the irradiation emitted by a $CO_2$ gas state laser marker for marking, which is more expensive to acquire, less energy efficient, more bulky and limited in its maximum permissible power for this textile application, which generates an increase in the cost of production and the space occupied in a textile factory. The non-reactivity of a fabric dyed with pure indigo contrasts with that of a fabric dyed with a sulphurous indigo pigment which does react to the application of a laser with a wavelength of 1.070nm.

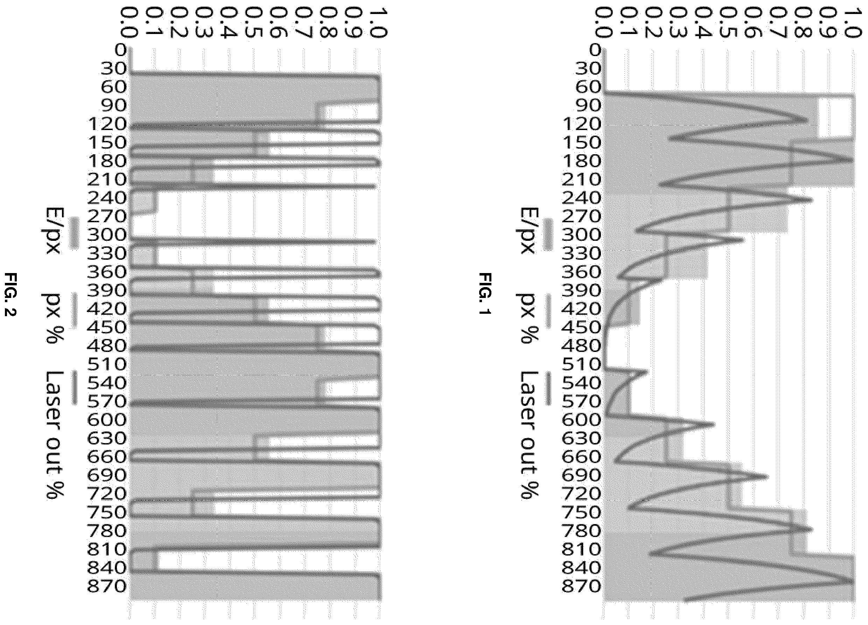

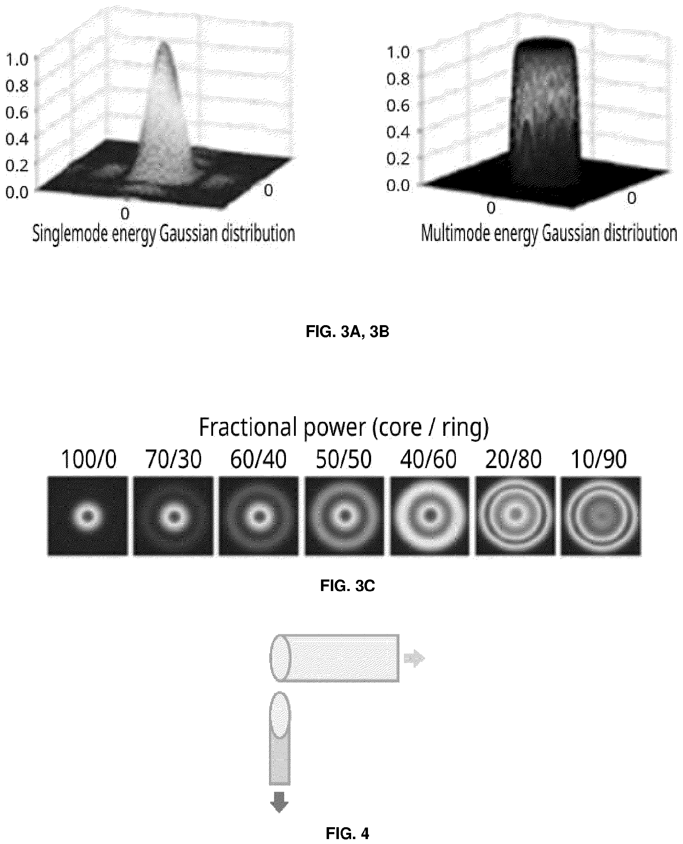

There is therefore a need to improve the manufacturing technique of the $CO_2$ laser finished garments, shown in figures 1 and 4.

Laser finishing reduces environmental impact, processing time, and overall processing costs, while maintaining the look and feel of traditional finishing techniques.

### Summary

A solid-state laser marker modifies the finish of a textile dyed with a base pigment, wherein the laser marker irradiates with at least one laser beam to at least one marking point or pixel of a predetermined zone of the dyed textile impregnated with an over-pigmentation composition superficially deposited on the base pigment of the textile material, totally or partially removing selected portions of both the over-pigmentation composition and a dyeing base pigment.

The over-pigmentation composition is applied by spraying on at least one zone of the textile material, by total or partial immersion of the textile material for a predetermined period of time, at a predetermined temperature, at a predetermined pressure or the like.

The over-pigmentation composition forms a spot, stained area, on the surface of the predetermined area of the dyed fabric, which is homogeneous and covers at least the area of the target fabric wherein a target design pattern will be applied.

The location of the stained area on the dyed fabric is in accordance with an objective design pattern. The over-pigmentation composition comprises a reactive over-pigment, preferably dark, such as carbon black or an ecological mineral pigment. The base pigment is initially a non-reactive pigment such as pure indigo, thus the dyed fabric exhibits an indigo colour.

The laser marker is of the high power optical fiber laser type that emits at least one laser beam in the range of infrared radiation of the continuous wave, CW, near infrared radiation type of modulable optical power cycle and amplitude, therefore, it is characterized by the absence of power intensity peaks significantly higher than the nominal power of the laser used, common in pulsed laser generators.

A deflection system redirects the emitted laser beam along the stained dyed textile material. The original design pattern is reproduced pixel by pixel or vector by vector by radiating the stained area until the design pattern is completed on the dyed textile material.

Those pixels that are within the stained area that are necessary to reproduce the target design pattern are successively irradiated. The rest of the pixels that are inside and outside the stained area, which correspond to the background of the pattern to be reproduced, are not irradiated because they are not necessary to reproduce the design pattern.

The NIR near infrared fiber optic laser marker radiates wavelengths within the range of 1,060 to 1,090 nm, preferably wavelengths of 1,070 nm.

In other embodiments, the near-infrared fiber optic laser marker radiates wavelengths within the range of 750 to 1,060 nm. Alternatively, the laser marker radiates visible wavelengths of the green type in the range 570 to 590 nm, violet-blue in the range 380 to 495 nm.

In another embodiment, the laser marker irradiates wavelengths in the ultraviolet UV range of the near UV type, UV-A in the range between 315 to 400 nm, medium UV, UV-B in the range 280 to 315 nm, far UV-C in the range 100 to 280 nm, in the latter case more common for disinfection and sterilisation tasks due to the ability to destroy micro-organisms.

The NIR near-infrared fiber optic laser marker irradiates laser beams to reproduce the target design pattern on stained areas of the dyed fabric. The design is reproduced with precision and high repetitiveness.

The dyed textile material is of the type, a textile fiber, yarn based on a twist of several fibers, knitted or woven fabric, composed of several yarns, a textile garment, a denim garment, a textile complement such as bag, wallet, belt, backpack, shoe, slipper, handkerchief, gloves, one, that some of the yarns or fibers that compose it have a cross section where the dyeing base pigmentation is deposited superficially forming an outer ring on the inner core of the yarn, usually in the warp thread, of the textile material.

A warp, denim cloth or cowboy-style cloth, where the warp yarns are those that are dyed, usually with an indigo colour. The yarns are dyed in a process known as ring dyeing. The surface of the yarns is dyed blue, leaving the core white. With the use and washing of the indigo-dyed fabric, the dye fades away, gradually revealing the white core of the yarns that gives the denim fabric a worn appearance.

Therefore, the dyed textile material comprises ring dyed yarns. The outer ring of the textile material has the colour of the base pigment, while the inner core of the textile material has a colour equal to or different from that of the base pigment.

The white or off-white colour of the inner core of the fabric is related to a denim garment such as a pair of jeans. Therefore, the base pigment does not penetrate into the inner core of the textile material.

A weft made of denim fabric has weft threads, which are generally not dyed and are white or natural in colour. These yarns pass over and under the warp yarns, creating the structure of the denim fabric. The combination of the dyed warp and the undyed weft is what gives the denim its characteristic appearance, with the outer side of the fabric predominantly showing the colour indigo and the inner side predominantly showing the colour white.

The over-pigmentation composition and the base pigment form a particle having a size suitable to react to the radiation of the NIR near infrared optical fiber laser marker, therefore, the NIR fiber laser marker discolours the pure indigo of the stained area. During an exposure time of the stained area exposed to the deflection system of laser beams, both the over-pigmentation composition and the base pigment are totally or partially removed without the textile material supporting great thermal impact. Thus, the NIR fiber laser marker discolours the ring-dyed yarns of the indigo-dyed fabric.

The fiber laser marker provides a discolouration to the dyed fabric that is located within the irradiated stained area. However, the indigo base pigment deposited on the fabric outside this irradiated stained area does not discolour or evaporate if it receives the laser beam emitted from the NIR fiber optic laser marker.

Pure indigo reacts to the NIR fiber optic laser marker if pure indigo dyed textile material is impregnated with the over-pigmentation composition. Sulphurous indigo such as sulphur bottom, sulphur top reacts to the NIR fiber optic laser marker without requiring the over-pigmentation composition.

The fiber optic laser marker modifies the appearance of the dyed fabric by removing in whole or in part selected portions of both the over-pigmentation composition and the dyeing base pigment disposed superficially on the outer surface of the inner core of the fabric. The degree of removal is a function of the exposure time of a predetermined marking position to the laser beam, as well as the optical power density of the laser beam, and the concentration of the over-pigmentation composition applied on the dyed textile material.

The modulated continuous wave, near infrared fiber optic laser marker emits continuous CW laser radiation, with an operating cycle that can be variable, and of optical power that is temporarily constant, variable within the exposure time range of the laser beam.

The irradiation exposure time of a marking position comprises an optical pulse rise time of less than or equal to 5 $\mu$s, a marking time of variable duration depending on the pixel hue of the target design pattern to be reproduced, and an optical pulse fall time of less than or equal to 5 $\mu$s. The exposure time presents a geometric shape of the type of a scalene triangle, an acute-angle scalene triangle, a rectangle, a scalene trapezoid.

The near-infrared fiber optic laser marker NIR directs and moves the laser radiation at a speed of movement of the laser beam between two contiguous marking points, equivalent to or less than the speed resulting from the calculation of the distance between the centres of both pixels, "pitch" distance, divided by the exposure time of one pixel, and different from the marking speed reached during the exposure time.

The NIR near infrared fiber optic laser marker has an operating cycle in the range of 0% to 100%. The NIR near-infrared fiber optic laser marker exhibits an optical pulse repetition rate equal to or lower than 100,000 pulses per second at a frequency equal to or lower than 100 kHz. It is not impossible to exceed 100 kHz in the near future.

The optical pulse repetition rate is a function of the optical power of the near infrared fiber optic laser marker NIR, the optical power being in the range of 0.5 kW to 10 kW, preferably 2 kW to 8 kW and preferably 6 kW

In another embodiment, the optical pulse has a rise time in the range of 1 to 3 $\mu$s and a fall time in the range of 1 to 3 $\mu$s.

The NIR fiber laser is of small size and weight, therefore, it has a compact structure, has a high energy efficiency that allows operation without a high input electrical power requirement, which reduces the environmental footprint and is of interest in environments where manufacturing space is scarce.

The NIR fiber optic laser marker is currently cheaper, price per watt of optical power, compared to any other medium and high power laser and increases the quality, definition and repeatability, of the final finish of the dyed textile material, and increases the durability of the processed textile materials.

The fiber optic laser marker provides differentiated finishing effects of an irradiated stained area with respect to other irradiated stained areas, also, based on the target design pattern applied, therefore, the dyed textile material has different finishes.

## Brief description of the figures

A more detailed explanation of the invention in accordance with the embodiments thereof is given in the description below, based on the attached figures wherein:

figure 1 shows in a graph the low repeatability of pulse-to-pulse energy, green colour, product of the rise and fall time of each laser pulse, in blue, of a $CO_2$ gas state laser marker,

figure 2 shows the generation of the same pulse train of figure 1 with a near infrared, NIR, fiber optic laser marker, with high energy repeatability, in green, product of reduced response times of an optical pulse, in blue, for pulses of a predetermined target energy, orange,

figure 3A shows a Gaussian distribution of the near infrared, NIR, fiber optic laser marker of the single mode SM type,

figure 3B shows a distribution of the near infrared, NIR, fiber optic laser marker of the multi-mode MM type,

figure 3C shows a distribution of the near infrared, NIR, fiber optic laser marker of the ring distribution type,

figure 4 shows in an oval cross section of the laser beam of a $CO_2$ gas state laser marker, if the oval laser beam is displaced perpendicularly to the wide diameter direction of the oval cross section, the resulting trace is thickened away from the target cross section, by about 1.2:1, if the oval laser beam is displaced perpendicularly to the short diameter direction of the oval cross section, the resulting trace approaches the target cross section, the cross section of the near infrared, NIR, fiber optic laser marker is always a circle, therefore the trace always has the same size in either of the two XY directions of an orthogonal reference system where the laser beam is displaced, without a variation in the quality of the marked pixel in relation to the marking direction, and

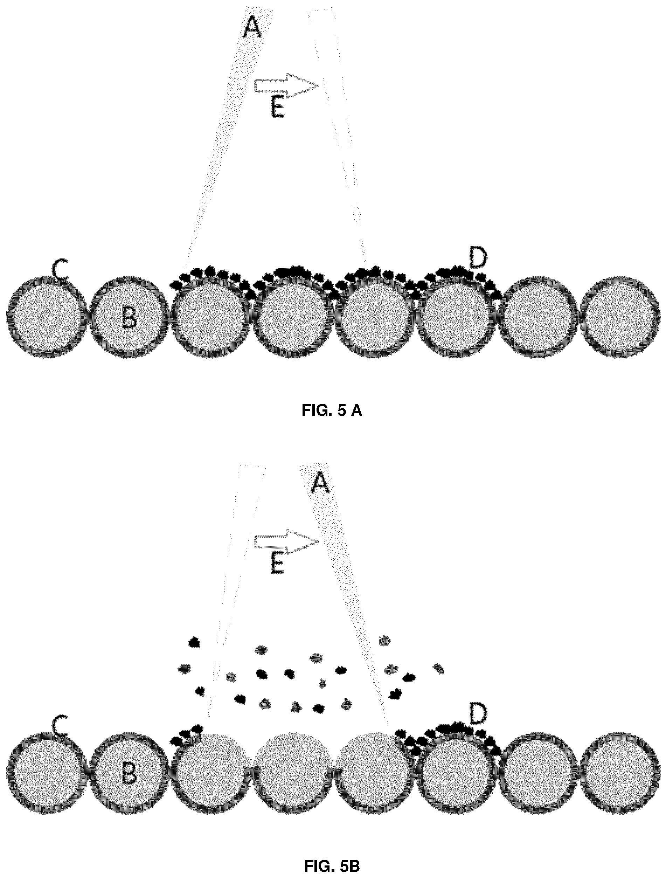

figures 5A, 5B show in a cross-section the textile material, e.g.: plain weave, section of 8 threads B, dyed with a ring base pigment C, an over-pigmentation composition D being superficially deposited, e.g. by spraying, a near-infrared fiber optic laser marker, NIR, irradiates with a laser beam A an area stained with the over-pigmentation composition D, the laser beam A is displaced in the direction E of the dyed textile material, to remove both the over-pigmentation composition D and the base pigment C without affecting the threads B of the textile material, based on an applied target design pattern.

## Detailed description

Referring to figures 2 to 5, one embodiment of a solid-state laser marker is used to modify the finish of a textile material B dyed with a non-reactive base pigment C. The solid-state laser marker irradiates a beam of laser beams A towards a marking point or pixel of a predetermined zone of the dyed textile material C previously impregnated with an over-pigmentation composition D which is superficially deposited on the base pigment C of the dyed textile material B.

The over-pigmentation composition D forms a spot, stained area, on the surface of the predetermined area of the dyed fabric. The location of the stained area on the dyed fabric is in accordance with an objective digital design pattern.

The laser marker is a fiber optic laser that emits beams of laser beams A in the range of infrared radiation, preferably, near infrared radiation, NIR, modulated continuous wave, CW, and constant optical power.

The near-infrared, NIR, fiber optic laser marker irradiates beams of laser beams A with wavelengths within the range 1,060 to 1,090 nm, preferably wavelengths of 1,070 nm.

The laser beam A irradiated by the near infrared fiber optic laser marker, NIR, has a configurable beam spot diameter, between 0.5 and 1.5 mm, preferably 0.7 mm wherein the optical embodiment is designed for a useful working area of 1.5 x 1.5 metres, placing the entire textile material or folded in half and therefore allowing to increase the resolution of the images in the range of 40 to 50 dpi. The diameter of the laser beam spot A is located at a distance of in the range of 1 to 2 m from the NIR fiber laser marker.

The size of the spot, laser beam A at the focal point, is calculated according to the following formula

$$\text{spot size due to diffraction} = \frac{4M^2\lambda f}{\pi D}$$

where,

- $\lambda$ is wavelength
- $f$ is lens focal length
- $D$ is input beam diameter at the lens (at the $1/e^2$ point)
- $M^2$ is the beam mode parameter

For NIR 1,070 nm near infrared fiber optic laser marker, area 1,500 x 1,500 mm:

Beam diameter: 30 mm

Laser Beam Parameter (M2): 7

Wavelength: 1,070 nm

Lens Focal Length: 2,000 mm

Spot Size: 634 $\mu$m, equivalent to 0.63 mm

Referring to figure 4, the 1,070 nm NIR near-infrared fiber optic laser marker, the spot size is substantially reduced, equivalent to a smaller "brush size" for drawing in greater detail, allowing to improve the resolution of the images to be transferred to the dyed textile material.

There is also another parameter that has an effect, called M2, M squared, which in the case of the multi-mode 1,070 nm NIR near-infrared fiber optic laser marker is higher than 5 to 7, which proportionally penalizes the size of the spot.

An electronic controller is connected to the NIR fiber optic laser marker and to an information data repository that stores at least one target digital design pattern.

The electronic controller transmits control instructions to the NIR fiber optic laser marker based on the stored target digital design pattern. The NIR fiber optic laser marker controls the laser radiation to modulate it and direct the laser beam A to impinge on marking positions of stained areas of the dyed textile material to mark the recovered target digital design pattern

Referring now to figs. 5A and 5B, the laser beam A by impinging on a marking position of the stained area of the textile material B, dyed fabric C, partially or totally removes both the over-pigmentation component D and the base pigment C by decolourising the dyed fabric, providing different discolouration shades of the base dye, without affecting the dyed fabric.

The electronic controller is a computer that instructs the NIR fiber laser marker to irradiate optical pulses of CW continuous laser radiation, of modulable operating cycle, and of constant, variable power amplitude, combined within the application time range of the laser beam.

The electronic controller transmits control instructions to supply the laser radiation wavelength, power, intensity, operating cycle, duration, shape and repetition rate of the laser radiation for each pixel point or vector forming the target digital design pattern to be transferred to the dyed textile material.

The set of transmitted control instructions includes information for following a marking path related to the target digital design pattern, positioning the NIR fiber optic laser marker over a predetermined position to be marked from a predetermined stained area of the dyed fabric to be irradiated, exposure time to the laser beam A of the laser marker, including the rise time, exposure or marking time and fall time of the optical pulse, instructions for positioning the laser beam A markers over the next position to be marked that could belong to a different stained area of the dyed fabric.

The number of control instructions issued is related to the digital design pattern to be applied on the dyed textile material.

The exposure time of a predetermined laser beam A is based on the target design pattern to be applied. Therefore, the laser beams A require different or similar exposure times according to the target design pattern to be reproduced, however, the rise time and the fall time of each emitted optical pulse are the same or approximately the same.

The irradiated optical pulse of the laser beam A shows a rise time, marking time, wherein the optical power remains constant, in a scenario where the amplitude of the optical power during the pulse is not modulated and a fall time, which have a shape of the type of scalene triangle, of acute scalene triangle with sides of different length and angles of different amplitude, each of the three angles has an amplitude less than 90°, of scalene trapezium that has four unequal sides, their interior angles being also different from each other, the sum of the four angles is equal to 360°.

The electronic controller transmits control instructions for directing the laser beam toward the marking point of the stained area to be irradiated based on the digital design pattern to be reproduced on the dyed fabric.

The NIR fiber optic laser marker exhibits a displacement rate of the laser beam A during the marking process lower than the displacement rate of the laser marker between stained areas, without radiating with the laser beam A, because neither the over-pigmentation composition D nor the base pigment C is removed from the dyed textile material.

The NIR infrared fiber laser marker provides different degrees of discolouration of the dyed textile material, within the same marking line, according to the following combinations:

- Varying the exposure time, keeping the working power of the laser marker at a constant level, keeping the size and energy distribution of the focal point constant, but varying the speed of movement between adjacent marking positions, therefore, only the time of exposure to the laser beam on each of the marking points is varied to make it correspond to the target digital design pattern.

- Maintaining the exposure time, keeping the speed of movement between adjacent marking positions constant, keeping the size and energy distribution of the focal point constant, but varying the working power of the laser marker, therefore, only the optical power amplitude of the laser beam on each of the marking points is varied to make it correspond to the target digital design pattern.

- Maintaining the exposure time, keeping the speed of movement between adjacent marking positions constant, keeping the working power of the laser marker constant, keeping the size and energy distribution of the focal point constant, but varying the temporal modulation, operating cycle, of the laser beam, therefore, only the operating cycle of the laser beam on each of the marking points is varied to make it correspond to the target digital design pattern.

- Maintaining the exposure time, keeping the speed of travel between adjacent marking positions constant, keeping the working power of the laser marker constant, keeping the temporal modulation, operating cycle, of the laser beam constant, but varying the size or energy distribution of the focal point and therefore varying the power density of the laser beam on each of the marking points to make it correspond to the target digital design pattern.

- Any combination of the above.

In an alternative embodiment, the laser beam has a Gaussian distribution, M2 or M squared = 1.0, or a multi-mode laser beam, M2 greater than 3, or a laser beam with a ring distribution, or any combination thereof.

The over-pigmentation composition D and the base pigment C of a predetermined marking position are decolourised together to a greater or lesser extent by varying the intensity or concentration of the laser beam A radiated on the marking point according to any of the modes described above, varying the speed of travel, varying the amplitude of optical power, varying the operating cycle, varying the size or density of the optical power of the focal point or its energy distribution, or any combination of the above parameters.

The NIR fiber optic laser marker irradiates optical pulses with an optical pulse rise time equal to or less than 5 $\mu$s, preferably 1 $\mu$s.

Changing the relative position of the irradiated laser beam A to the surface of the dyed fabric, in some scenarios, involves moving the dyed fabric relative to the laser beam A radiated by the NIR fiber laser marker.

The electronic controller transmits control instructions to guides of the laser beam of the NIR fiber laser marker that change the direction of the radiation of the laser beam A on the marking position of the stained area. The guides of the laser beam A to spatially modulate it by means of at least one of the following deflection systems:

- rotating polygonal mirror,
- piezoelectric scanner,
- high resolution acousto-optic, or electro-optic deflector
- linear guide,
- or, preferably, a set of two mirrors placed in XY galvanometric scanners,
- or any combination of the above

which is capable of deflating, guiding the laser beam A temporarily modulated, or modulated in optical power amplitude, or modulated in size or energy distribution of the laser beam, or modulated by its operating cycle, or modulated by any combination of the above, at high angular speed on the 1D scan line along a vector or sequence of points, or of a 2D scan plane of the textile material, preferably at scan line repetition frequencies of up to 100,000 Hz or even higher, and which is controlled through the electrical or optical signal, digital or analogue, coming from the information processing unit that manages the system.

In another embodiment, the electronic controller is connected to a movable platform on which the dyed textile material to be radiated is arranged. The movable platform moves relative to the beam of laser beams that is radiated over the marking position of the stained area of the dyed textile material and arranged on the platform.

If the digital design pattern comprises marking positions with different degree of partial discolouration, the electronic controller transmits control instructions regarding the exposure time, that the laser beam will irradiate each marking position. The discolouration of the marking position of the irradiated stained area is achieved by controlling parameters such as the exposure time of the marking position to the irradiated laser beam, the modulation of the operating cycle, or of the optical power amplitude, of the operating cycle, of the size and/or energy distribution of the laser beam, or of any combination of the above.

According to the exposure time or density, it is possible to provide different finishes of dyed textile material, producing wear and discolouration of the dyed textile material without burning the dyed textile material. If the set of the above parameters is varied, the textile material can also be burned, either totally or partially.

The NIR fiber optic laser marker has an operating cycle in the range of 0% to 100%. The fiber optic laser marker has an optical pulse repetition rate less than, equal to, or greater than 100,000 pulses per second at a frequency less than, equal to, or greater than 100 kHz.

The optical pulse repetition rate is chosen based on the optical power of the near infrared fiber optic laser marker NIR, the output optical power being in the range of 0.5 kW to 20 kW, preferably 2 kW to 12 kW and preferably 6 kW.

In another embodiment, the optical pulse has a rise time in the range of 1 to 3 µs and a fall time in the range of 1 to 3 µs.

Once the laser beam of the NIR fiber optic laser marker has finished modifying the finish of the related dyed fabric, the rest of the over-pigmentation composition D of the non-irradiated stained area, remains deposited on the base pigment C of the dyed fabric, being removed from the dyed fabric by a washing type removal process, in an aqueous medium such as water, water with peroxide, or washing in a gaseous medium such as ozone, supercritical CO2, or nitrogen.

Referring to figure 4, the NIR fiber laser marker is small in size and weight, therefore, it has a compact structure, has a high energy efficiency that allows operation without a high input electrical power requirement, which reduces the environmental footprint and is of interest in environments where manufacturing space is scarce. In addition, and having no optical elements exposed to the environment, it does not require any optical maintenance, thus reducing maintenance costs.

The fiber optic laser marker provides differentiated finishing effects of an irradiated stained area with respect to other irradiated stained areas, also, based on the target design pattern applied, therefore, the dyed textile material has different finishes.

**Claims**

1. A solid-state laser marker modifies the finish of a textile material (B) dyed with a base pigment (C), **characterized in that** the laser marker is adapted to irradiate at least one laser beam (A) to at least one marking point of a predetermined zone of the dyed textile material impregnated with an over-pigmentation composition (D), following a predetermined target design pattern, with at least one laser beam (A) being adapted to totally or partially remove both the over-pigmentation composition (D) and the base pigment (C) of the textile material (B).

2. Laser marker according to claim 1, wherein the laser marker is a fiber optic laser marker.

3. Laser marker according to claim 2, wherein the fiber optic laser marker is of continuous wave infrared with a variable exposure time, with a percentage of the modulable operating cycle, with a variable optical power, with a focal point on the dyed textile with a variable diameter size, with an energy distribution of the modulable laser beam either Gaussian, or ring, or of a combination of both, in the latter case with variable power distribution between both distributions, any combination of the above, which irradiates the laser beam (A) towards the predetermined zone of the dyed textile during an exposure time.

4. Laser marker according to claims 2 or 3, wherein the near infrared fiber optic laser marker is adapted to emit wavelengths within the range 1,060 to 1,090 nm, preferably wavelengths of 1,070 nm.

5. Laser marker according to claim 4, wherein the near infrared fiber optic laser marker is adapted to emit wavelengths within the NIR range closest to the visible within the range 750-1,060 nm, visible within the range 400-750 nm, UV.

6. Laser marker according to claim 5, wherein the exposure time comprises an optical pulse rise time of less than or equal to 5 µs, the marking time and an optical pulse fall time of less than or equal to 5 µs.

7. Laser marker according to claim 6, wherein the rise time of the optical pulse and the fall time of the optical pulse are in the range of 1 to 3 µs.

8. Laser marker according to claim 7, wherein the exposure time comprises the rise time, a marking time and the descent time, has a geometric shape of the type of a scalene triangle, an acute scalene triangle, a rectangle, a scalene trapezium.

9. Laser marker according to claim 8, wherein the near-infrared fiber optic laser marker is adapted to be modulated with an operating cycle in the range of 0% to 100%.

10. Laser marker according to claim 8, wherein the near-infrared fiber optic laser marker is adapted to irradiate the laser beam at a marking speed other than a speed of movement of the laser beam between two adjacent marking points.

11. Laser marker according to claim 8, wherein the near-infrared optical fiber laser marker is adapted to irradiate the laser beam at a modulation by variation of the exposure time, of the relative speed on the dyed textile material.

12. Laser marker according to claim 8, wherein the near-infrared fiber optic laser marker is adapted to irradiate the laser beam at a modulation by varying the optical power amplitude during the exposure time.

13. Laser marker according to claim 8, wherein the near-infrared fiber optic laser marker is adapted to irradiate the laser beam to a laser beam size modulation providing an out-of-focus effect of the laser beam, the laser beam energy distribution being of the Gaussian laser beam type, multi-mode, ring, or combination of the above.

14. Laser marker according to any of claims 9 to 13, wherein the near-infrared fiber optic laser marker is adapted to irradiate optical pulses with an optical pulse repetition rate less than, equal to, or greater than 100,000 per second at a frequency equal to or greater than 100 kHz.

15. Laser marker according to claim 14, wherein the optical pulse repetition rate is a function of the optical power of the near infrared fiber optic laser marker, the optical power being in the range of 0.5 kW to 20 kW, preferably 2 kW to 12 kW and preferably 6 kW.

E/px      px %      Laser out %

**FIG. 1**

E/px      px %      Laser out %

**FIG. 2**

Singlemode energy Gaussian distribution

Multimode energy Gaussian distribution

FIG. 3A, 3B

Fractional power (core / ring)

100/0    70/30    60/40    50/50    40/60    20/80    10/90

FIG. 3C

FIG. 4

FIG. 5 A

FIG. 5B

## EUROPEAN SEARCH REPORT

**Application Number**

EP 24 38 2878

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TSE SHUN-TING ET AL: "Effect of laser treatment on pigment printing on denim fabric: low stress mechanical properties", CELLULOSE, vol. 27, no. 17, 19 September 2020 (2020-09-19), pages 10385-10405, XP037304717, ISSN: 0969-0239, DOI: 10.1007/S10570-020-03461-7 * experimental section; figure 4; tables 1-2 * ----- | 1-15 | INV. D06P1/00 D06P1/44 D06P1/62 D06P1/651 D06P5/13 D06P5/15 D06P5/20 B23K26/0622 B23K26/06 B23K26/082 B23K26/36 |
| X | TSE SHUN-TING ET AL: "Effect of Laser Treatment on Pigment Printing on Denim Fabric - A Study of Colour Properties", FIBERS AND POLYMERS, THE KOREAN FIBER SOCIETY, SEOUL, vol. 23, no. 3, 1 March 2022 (2022-03-01), pages 728-735, XP037788650, ISSN: 1229-9197, DOI: 10.1007/S12221-022-3096-5 [retrieved on 2022-04-01] * experimental section; figure 6; tables 1-2 * ----- | 1-15 | |

**TECHNICAL FIELDS SEARCHED (IPC)**

D06P

The present search report has been drawn up for all claims

| Place of search | Date of completion of the search | Examiner |
|---|---|---|
| The Hague | 6 February 2025 | Massella, Daniele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)